# EUROPEAN PATENT APPLICATION

(11) **EP 3 001 391 A1**
(43) Date of publication of application: **30.03.2016**
(21) Application number: 15187110.0
(22) Date of filing: 28.09.2015
(51) Int. Cl.: G07G 1/00, G06Q 20/20

(54) **CHECKOUT SYSTEM, AND COMMODITY REGISTRATION APPARATUS AND SETTLEMENT APPARATUS IN THE SAME**

(30) Priority: 29.09.2014 JP 2014198714
(71) Applicant: Toshiba TEC Kabushiki Kaisha, Tokyo 141-0032 (JP)
(72) Inventor: KAMAMOTO, Shunichiro, Shinagawa-ku, Tokyo 141-0032 (JP); NAMURA, Shinya, Shinagawa-ku, Tokyo 141-0032 (JP); SANO, Naoto, Shinagawa-ku, Tokyo 141-0032 (JP); MIYAZAKI, Jun, Shinagawa-ku, Tokyo 141-0032 (JP); KAWAGUTI, Yuuki, Shinagawa-ku, Tokyo 141-0032 (JP)
(74) Representative: Takeuchi, Maya

(57) **Abstract**

A checkout system includes a commodity registration apparatus and a plurality of settlement apparatuses. The commodity registration apparatus comprises a determination section which determines execution of a split settlement according to an instruction, a first control section which prohibits start of creation of a new list until settlement information is notified in case of no split settlement, or allows start of creation of a new list even if no settlement information is notified in case of the split settlement, and a second control section which controls the notification section to notify all the settlement information stored in a memory section to one of the settlement apparatuses according to an instruction of notification of settlement information. The settlement apparatus comprises a settlement section which executes a settlement processing according to the settlement information and an issuing section which issues receipts separately based on each of a plurality of settlement information.

## Description

### FIELD

Embodiments described herein relate generally to a checkout system including a commodity registration apparatus and a settlement apparatus, a method for notifying settlement information from the commodity registration apparatus, and a method for issuing a receipt from the settlement apparatus.

### BACKGROUND

A semi-self-type checkout system including a commodity registration apparatus and a settlement apparatus in a supermarket and the like is well known. A purchase registration processing and a settlement processing are separately carried out by the commodity registration apparatus and the settlement apparatus. A store clerk carries out an operation on the commodity registration apparatus and a customer carries out an operation on the settlement apparatus after the purchase registration processing is carried out by the commodity registration apparatus.

In such a system, settlement information for a settlement processing is transferred from the commodity registration apparatus to a settlement apparatus that is in an idle state. If a plurality of settlement information is transferred to the same settlement apparatus, then the customer desiring for a settlement processing may be confused. Thus, after receiving one settlement information, the settlement apparatus receives no new settlement information until a settlement processing based on the received settlement information is completed.

However, there is a case in which a customer requests that a plurality of commodities that are carried to the checkout counter in a store is divided into plural groups to carry out checkout operation for each group, separately. Such a settlement form is hereinafter referred to as a 'split settlement' in the embodiment.

In the case of split settlement, a plurality of settlement information respectively relating to a plurality of settlement processing is generated in the commodity registration apparatus. Each of the settlement information is transferred to different settlement apparatus. As a consequence, the customer has to operate a plurality of settlement apparatuses to complete a settlement processing (split settlement).

If, after a settlement processing for one settlement is completed in a settlement apparatus, settlement information corresponding to a next settlement processing is transferred to the settlement apparatus that completes the former settlement processing, then the customer can carry out a plurality of settlement operations in the same settlement apparatus. However, in this case, the commodity registration apparatus has to wait for a certain time for the transfer of the next settlement information, and therefore the processing efficiency of the commodity registration apparatus is adversely affected.

Thus, it is desired to successively carry out a settlement processing based on each of a plurality of settlement information relating to a split settlement with the same settlement apparatus without increasing waiting time for the transfer of the settlement information in the commodity registration apparatus.

### DESCRIPTION OF THE DRAWINGS

Fig. 1 is an oblique view of a checkout system according to an embodiment;
Fig. 2 is a block diagram illustrating a commodity registration apparatus and a settlement apparatus shown in Fig. 1;
Fig. 3 is a flowchart illustrating a control processing carried out by a CPU of the commodity registration apparatus shown in Fig. 2;
Fig. 4 is a flowchart illustrating a control processing carried out by the CPU of the commodity registration apparatus shown in Fig. 2;
Fig. 5 is a diagram exemplifying a standby screen;
Fig. 6 is a diagram exemplifying a registration screen;
Fig. 7 is a diagram exemplifying a first selection screen;
Fig. 8 is a diagram exemplifying a second selection screen;
Fig. 9 is a diagram exemplifying a notification screen;
Fig. 10 is a flowchart illustrating a control processing carried out by the CPU of the settlement apparatus shown in Fig. 2; and
Fig. 11 is a flowchart illustrating the control processing carried out by the CPU of the settlement apparatus shown in Fig. 2.

### DETAILED DESCRIPTION

In accordance with an embodiment, a checkout system comprises a commodity registration apparatus including a creation section, a generation section a notification section, a determination section, a first control section, a memory section and a second control section, and a settlement apparatus including a settlement section and an issuing section. The creation section acquires commodity codes of purchased commodities to create a list of the purchased commodities. The generation section generates settlement information for settling the purchased commodities according to the list created by the creation section. The notification section notifies one of the settlement apparatuses of the settlement information generated by the generation section. The determination section determines, according to an instruction from an operator, execution of a split settlement in which the settlement of the commodities purchased by the same customer is split into plural settlements. The first control section controls the creation section to prohibit the start of the creation of a new list until settlement information is notified by the notification section if the execution of the split settlement is not determined by the determination section, or to allow the start of the creation of a new list even if no settlement information is notified by the notification section if the execution of the split settlement is determined. The memory section stores the settlement information that is not notified by the notification section. The second control section controls the notification section to notify all the settlement information stored in the memory section to one of the settlement apparatuses according to an instruction from an operator. The settlement section executes a settlement processing according to the settlement information notified by the notification section. The issuing section issues, if a plurality of settlement information are notified by the notification section, receipts separately based on each of the plurality of settlement information.

The present invention also relates to a commodity registration apparatus constituting a checkout system with at least one settlement apparatus, comprising: a creation section configured to acquire commodity codes of the purchased commodities to create a list of the purchased commodities; a generation section configured to generate settlement information for settling the purchased commodities according to the list created by the creation section; a notification section configured to notify one of the settlement apparatuses of the settlement information generated by the generation section; a determination section configured to determine, according to an instruction, the execution of a split settlement in which the settlement of the commodities purchased by the same customer is split into plural settlements; a first control section configured to control the creation section to prohibit the start of the creation of a new list until settlement information is notified by the notification section if the execution of the split settlement is not determined by the determination section, or to allow the start of the creation of a new list even if no settlement information is notified by the notification section if the execution of the split settlement is determined; a memory section configured to store the settlement information that is not notified by the notification section; and a second control section configured to control the notification section to notify all the settlement information stored in the memory section to one of the settlement apparatuses according to an instruction of notification of the settlement information.

The present invention also relates to a settlement apparatus constituting a checkout system with at least one commodity registration apparatus including a creation section configured to acquire commodity codes of purchased commodities to create a list of the purchased commodities, a generation section configured to generate settlement information for settling the purchased commodities according to the list created by the creation section, a notification section configured to notify one of the settlement apparatuses of the settlement information generated by the generation section, a determination section configured to determine, according to an instruction from an operator, the execution of a split settlement in which the settlement of the commodities purchased by the same customer is split into plural settlements, a first control section configured to control the creation section to prohibit the start of the creation of a new list until settlement information is notified by the notification section if the execution of the split settlement is not determined by the determination section, or to allow the start of the creation of a new list even if no settlement information is notified by the notification section if the execution of the split settlement is determined, a memory section configured to store the settlement information that is not notified by the notification section, and a second control section configured to control the notification section to notify all the settlement information stored in the memory section to one of the settlement apparatuses according to an instruction of notification of the settlement information, comprising: a settlement section configured to execute a settlement processing according to the settlement information notified by the notification section; and an issuing section configured to issue, if a plurality of settlement information are notified by the notification section, receipts separately based on each of the plurality of settlement information.

Preferably, the settlement apparatus further comprises: a setting section configured to set whether or not a collective settlement is executed according to an instruction from a second operator different from the operator if a plurality of settlement information are notified by the notification section, wherein the settlement section separately executes a plurality of times of settlement processing based on the plurality of settlement information notified by the notification section if it is set by the setting section that the collective settlement is not executed, or executes settlement processing once to settle the sum of the total amount shown in the plurality of settlement information notified by the notification section if it is set by the setting section that the collective settlement is executed.

The present invention further relates to a method for notifying settlement information from a commodity registration apparatus which constitutes a checkout system with at least one settlement apparatus, including: acquiring commodity codes of purchased commodities to create a list of the purchased commodities; generating settlement information for settling the purchased commodities according to the created list; notifying one of the settlement apparatuses of the settlement information; determining, according to an instruction, the execution of a split settlement in which the settlement of the commodities purchased by the same customer is split into plural settlements; prohibiting the start of the creation of a new list until settlement information is notified if the execution of the split settlement is not determined or allowing the start of the creation of a new list even if no settlement information is notified if the execution of the split settlement is determined; storing the settlement information that is not notified; and notifying all the settlement information to one of the settlement apparatuses according to an instruction of notification of the settlement information.

The present invention also includes a method for issuing a receipt from one of settlement apparatuses of a checkout system composed of at least one commodity registration apparatus and the settlement apparatuses, including: executing a settlement processing according to the settlement information notified from the commodity registration apparatus; and issuing, if a plurality of settlement information are notified from the commodity registration apparatus, receipts separately based on each of the plurality of settlement information.

A preferred embodiment of the present invention given as non-limiting examples, is described below with reference to the accompanying drawings.

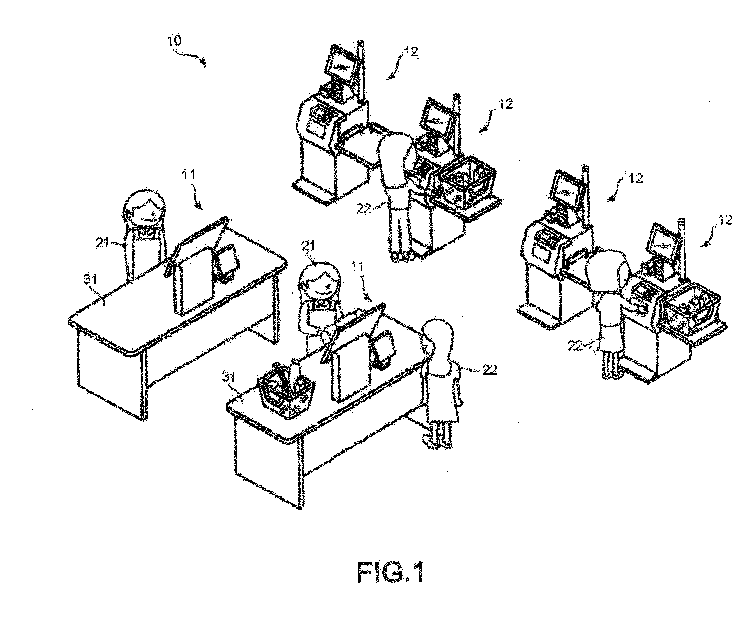

Fig. 1 is an oblique view of a checkout system 10 according to the present embodiment.

The checkout system 10 comprises at least one commodity registration apparatus 11 and at least one settlement apparatus 12. Fig. 1 shows a checkout system 10 which comprises two commodity registration apparatuses 11 and four settlement apparatuses 12. The checkout system 10 may be equipped with an optional number of commodity registration apparatuses 11 and an optional number of settlement apparatuses 12, and the ratio of the number of the commodity registration apparatuses 11 to the number of the settlement apparatuses 12 may be an optional value.

The commodity registration apparatus 11 and the settlement apparatus 12 are arranged at the checkout zone of a store such as a supermarket.

A store clerk 21 acting as a checker in the store operates the commodity registration apparatus 11. A customer 22 who purchases commodity sold in the store operates the settlement apparatus 12. There is a case that the customer 22 also carries out a part of the operation of the commodity registration apparatus 11. Further, there is also a case that the store clerk 21 operates the settlement apparatus 12.

In Fig. 1, the commodity registration apparatus 11 is mounted on a working table 31 having a rectangular top plate. A plurality of working tables 31 are arranged in parallel in the longitudinal direction of the top plates thereof to form a passage for the customer 22 therebetween.

The commodity registration apparatus 11 has a purchase registration function, a settlement information generation function, a settlement processing function and a function of notifying the settlement apparatus 12 of settlement information. The purchase registration function refers to a processing function of registering, as a purchased commodity, a commodity carried by the customer walking into the passage. The settlement processing function refers to a processing function of settling the purchased commodities. The settlement information refers to information needed for a settlement processing.

When settlement information is transferred from the commodity registration apparatus 11, the settlement apparatus 12 carries out a settlement processing based on the settlement information.

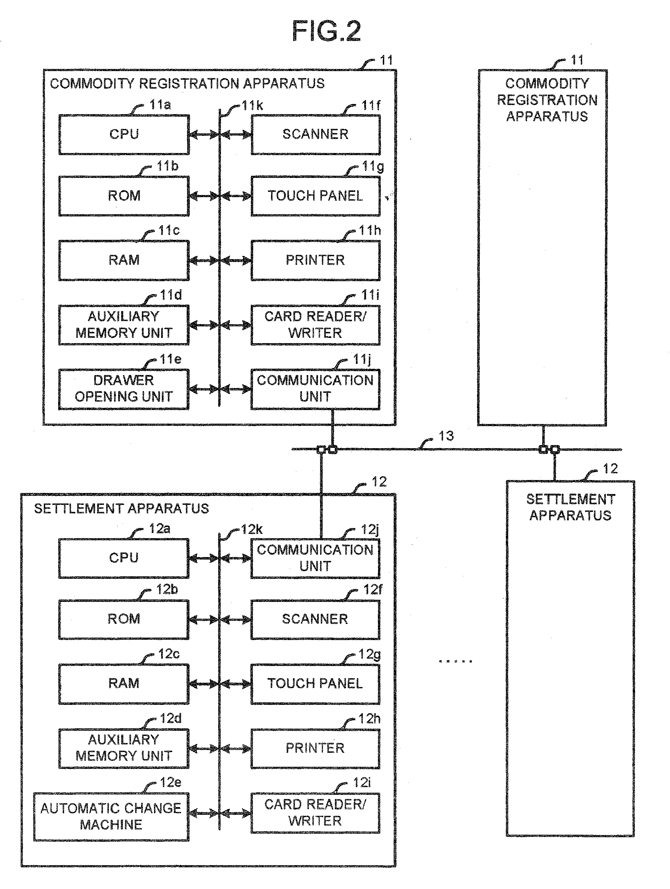

Fig. 2 is a block diagram illustrating the commodity registration apparatus 11 and the settlement apparatus 12.

The commodity registration apparatus 11 and the settlement apparatus 12 are both connected with a LAN (Local Area Network) 13. The LAN 13 may be replaced by another communication network such as the Internet or a wireless LAN. Alternatively, information is transmitted and received between the commodity registration apparatus 11 and the settlement apparatus 12 via a server.

The commodity registration apparatus 11 comprises a CPU (Central Processing Unit) 11a, a ROM (Read-Only Memory) 11b, a RAM (Random-Access Memory) 11c, an auxiliary memory unit 11d, a drawer opening unit 11e, a scanner 11f, a touch panel 11g, a printer 11h, a card reader/writer 11i, a communication unit 11j and a transmission system 11k.

The CPU 11a, the ROM 11b, the RAM 11c and the auxiliary memory unit 11d are connected with each other via the transmission system 11k to constitute a computer.

The CPU 11a acting as the main unit of the computer controls each section of the commodity registration apparatus 11 for realizing functions of the commodity registration apparatus 11 according to the operating system, middleware and application programs stored in the ROM 11b and the RAM 11c.

The ROM 11b acting as a main memory unit of the computer stores the operating system. The ROM 11b also stores the middleware or application programs in some cases. Moreover, the ROM 11b also stores reference data required to execute various processing by the CPU 11a.

The RAM 11c acting as the main memory unit of the computer also stores reference data required to execute various processing by the CPU 11a. Further, the RAM 11c is used as a so-called working area in which data temporarily used by the CPU 11a for executing various processing is stored in advance.

The auxiliary memory unit 11d stores data used by the CPU 11a for various processing or data generated during the processing carried out by the CPU 11a. The auxiliary memory unit 11d may be, for example, an EEPROM (Electric Erasable Programmable Read-Only Memory), an HDD (Hard Disk Drive) or an SSD (Solid State Drive).

Application programs stored in the ROM 11b or the auxiliary memory unit 11d include a control program relating to a control processing described later. The transfer of the commodity registration apparatus 11 is made while the control program is stored in the ROM 11b or the auxiliary memory unit 11d. However, the commodity registration apparatus 11 may also be transferred in a state that the control program is not stored in the ROM 11b or the auxiliary memory unit 11d and meanwhile the control program is recorded in a removable recording medium such as a magnetic disk, a magnetic-optical disk, an optical disk or a semiconductor memory or transferred via a network. The control program may also be written in the auxiliary memory unit 11d of the commodity registration apparatus 11 that is transferred separately.

The drawer opening unit 11e automatically opens a drawer which receives banknotes and coins.

The scanner 11f reads a commodity code of a commodity to acquire information of the commodity. The scanner 11f may be various types of known scanners. The scanner 11f may correspond to one type or a plurality of types of known scanners. That is, the scanner 11f may be a fixed or handy-type two-dimension code scanner. Further, the scanner 11f may be a type which recognizes the category of a commodity according to the image of the commodity with an image recognition technology.

The touch panel 11g includes a display device and a touch sensor. The display device displays a GUI screen or any other screen. The display device may be, for example, a well-known device using a color LCD. The touch sensor is overlaid on the display surface of the display device. The touch sensor detects the touch position on the display surface of the display device by the operator and sends the position information to the CPU 11a. The touch sensor may be a well-known device.

The printer 11h which is, for example, a thermal printer or an impact dot printer, issues a receipt by printing various character strings or images on a receipt paper.

The card reader/writer 11i reads data recorded in a card and meanwhile writes data into the card. Other than the cards for settlement such as a credit card, debit card, electronic money card and prepaid card, the card further includes various other kinds of cards in which information relating to a settlement processing is stored, for example, a membership card or point card. The card reader/writer 11i may be a magnetic, a contact-type or a non-contact-type device or a plurality of types of devices.

The communication unit 11j carries out communication via the LAN 13.

The transmission system 11k transfers data transmitted or received among the CPU 11a, ROM 11b, the RAM 11c, the auxiliary memory unit 11d, the drawer opening unit 11e, the scanner 11f, the touch panel 11g, the printer 11h, the card reader/writer 11i and the communication unit 11j. The transmission system 11k may be a well-known system which includes various buses such as system bus and various interface circuits for connecting the buses with each section.

Further, the hardware of the commodity registration apparatus 11 may be, for example, a well-known POS terminal.

The settlement apparatus 12 comprises a CPU 12a, a ROM 12b, a RAM 12c, an auxiliary memory unit 12d, an automatic change dispensing machine 12e, a scanner 12f, a touch panel 12g, a printer 12h, a card reader/writer 12i, a communication unit 12j and a transmission system 12k.

The CPU 12a, the ROM 12b, the RAM 12c and the auxiliary memory unit 12d are connected with each other via the transmission system 12k to constitute a computer.

The CPU 12a acting as a center unit of the computer controls each section for realizing the functions of the settlement apparatus 12 according to the operating system, the middleware and the application programs stored in the ROM 12b and the RAM 12c.

The ROM 12b which acting as the main memory unit of the computer stores the operating system. There may be a case in which the ROM 12b also stores the middleware or application programs. Further, the ROM 12b also stores reference data required to execute various processing by the CPU 12a.

The RAM 12c acting as the main memory unit of the computer also stores reference data required to execute various processing by the CPU 12a. Further, the RAM 12c is used as a so-called working area in which data temporarily used by the CPU 12a that carries out various processing is stored in advance.

The auxiliary memory unit 12d stores data used by the CPU 12a for various processing or data generated during the processing carried out by the CPU 12a. The auxiliary memory unit 12d may be, for example, an EEPROM, an HDD or an SSD.

Application programs stored in the ROM 12b or the auxiliary memory unit 12d include a control program recorded for a control processing described later. The settlement apparatus 12 is transferred while the control program is stored in the ROM 12b or the auxiliary memory unit 12d. However, the settlement apparatus 12 may also be transferred in a state that the control program is not stored in the ROM 12b or the auxiliary memory unit 12d and meanwhile the control program is recorded in a removable recording medium such as a magnetic disk, a magnetic-optical disk, an optical disk or a semiconductor memory or transferred via a network. The control program may also be written in the auxiliary memory unit 12d of the settlement apparatus 12 that is transferred separately.

The automatic change dispensing machine 12e receives coins and bills input. Further, the automatic change dispensing machine 12e dispenses coins and bills as change.

The scanner 12f reads a commodity code of a commodity to acquire information of the commodity. The scanner 12f may be various known scanners. The scanner 12f may correspond to one type or a plurality of types of known scanners. That is, the scanner unit 12f may be a fixed or handy-type two-dimension code scanner. Further, the scanner 12f may be a type which recognizes the category of a commodity according to the image of the commodity with an image recognition technology.

The touch panel 12g includes a display device and a touch sensor. The display device displays a GUI screen or any other screens. The display device may be, for example, a well-known device using a color LCD. The touch sensor is overlaid on the display surface of the display device. The touch sensor detects the touch position on the display surface of the display device by the operator and sends the position information to the CPU 12a. The touch sensor may be a well-known device.

The printer 12h which is, for example, a thermal printer or an impact dot printer, issues a receipt by printing various character strings or images on a receipt paper.

The card reader/writer 12i reads the data recorded in a card and meanwhile writes data into the card. Other than cards for settlement such as credit card, debit card, electronic money card and prepaid card, the card further includes various other cards in which information required to a settlement processing is stored, for example, a membership card or point card. The card reader/writer 12i may be one of a magnetic, a contact-type and a non-contact-type devices or a plurality of types of devices.

The communication unit 12j performs communication via the LAN 13.

The transmission system 12k transfers data transmitted or received among the CPU 12a, ROM 12b, the RAM 12c, the auxiliary memory unit 12d, the automatic change dispensing machine 12e, the scanner 12f, the touch panel 12g, the printer 12h, the card reader/writer 12i and the communication unit 12j. The transmission system 12k may be a well-known system which includes various buses such as system bus and various interface circuits for connecting the buses with each foregoing section.

Further, the hardware of the settlement apparatus 12 may be, for example, a well-known self-checkout POS terminal.

Next, operation of the checkout system 10 with the foregoing structure is described below.

Further, the content of the processing described below is merely an example, and various other processing that can achieve an equivalent result can also be properly adopted.

If the commodity registration apparatus 11 is activated in a mode in which the registration processing of purchased commodities is carried out, then the CPU 11a starts a control processing according to the control program stored in the ROM 11b or the auxiliary memory unit 11d.

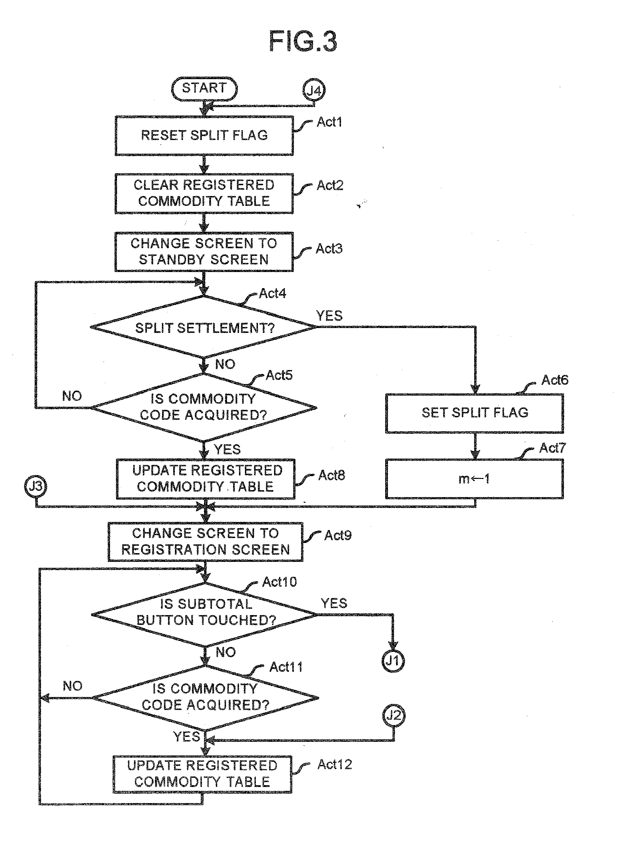

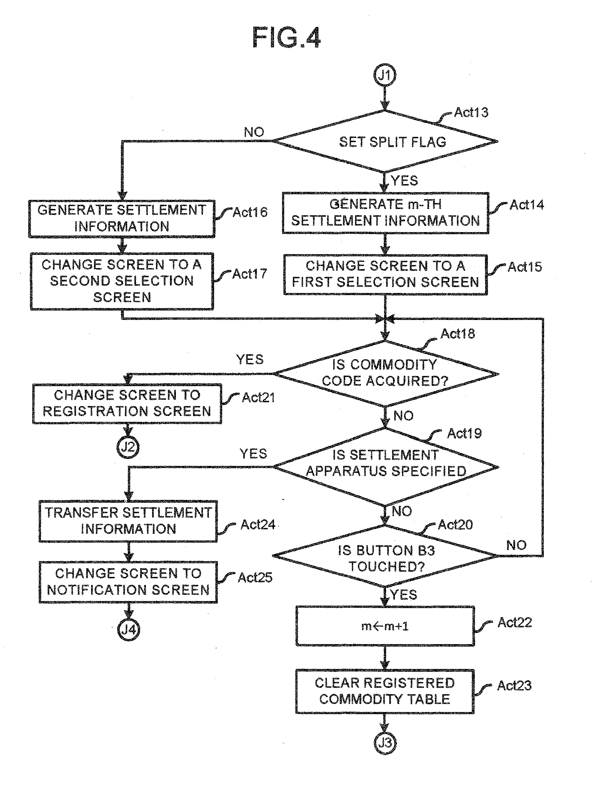

Fig. 3 and Fig. 4 are flowcharts illustrating the control processing carried out by the CPU 11a.

In Act 1, the CPU 11a resets a split flag. The split flag represents the setting of a split settlement if it is set. The split flag is realized as, for example, a 1-bit data in the RAM 11c.

In Act 2, the CPU 11a clears a registered commodity table set in the RAM 11c. The registered commodity table is a data table for recording information relating to a registered purchase-commodity.

In Act 3, the CPU 11a changes a part of the screen of the touch panel 11g to a standby screen.

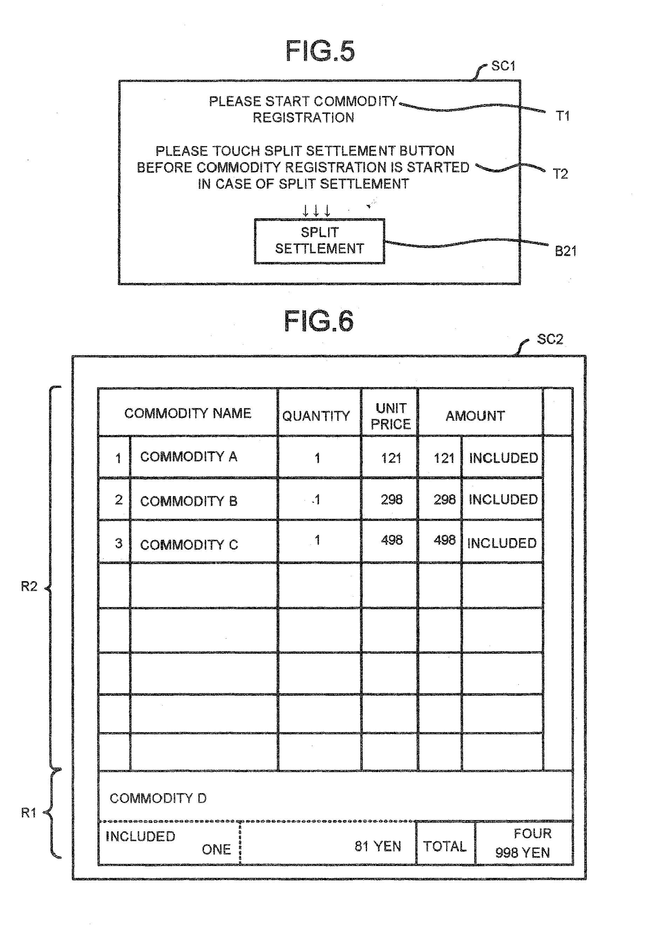

Fig. 5 is a diagram exemplifying a standby screen SC1.

The standby screen SC1 includes texts T1 and T2 and a button B21.

The text T1 instructs the store clerk 21 to start the registration operation for a purchased commodity. The text T2 instructs the store clerk 21 to touch the button B21 before starting registration of the purchased commodities if the split settlement is requested.

In Act 4, the CPU 11a determines whether or not execution of the split settlement is instructed. If the result of the determination of the CPU 11a is 'NO' as an operation for instructing the split settlement is not carried out, Act 5 is taken.

In Act 5, the CPU 11a determines whether or not the commodity code of a commodity to be purchase-registered is acquired. If the result of the determination of the CPU 11a is 'NO' as no commodity code is acquired, Act 4 is taken again.

In this way, the CPU 11a stands by in Act 4 and Act 5 to wait for an instruction for the execution of the split settlement or the acquisition of a commodity code. Further, in the standby state, the CPU 11a also determines the occurrence of another event such as the execution of another operation and may proceed to execute a processing corresponding to the event.

If the customer requests the store clerk 21 to perform the split settlement, the store clerk 21 instructs the execution of the split settlement by, for example, touching the button B21. Moreover, if such an operation is detected by the touch panel 11g, then the result of the determination of the CPU 11a is 'Yes' in Act 4, and Act 6 is taken.

In Act 6, the CPU 11a sets the split flag.

In this way, with the execution of the control processing by the CPU 11a according to a control program, the computer having the CPU 11a as the main unit thereof and the touch panel 11g together function as a determination section.

In Act 7, the CPU 11a sets '1' as the value of a variable m. The variable m represents the number of times of settlement processing. Then, Act 9 is taken.

Further, the CPU 11a acquires a commodity code with an operation of the store clerk 21 through a well-known processing different from the control processing shown in Fig. 3 and Fig. 4. Then the result of the determination of CPU 11a in Act 5 is 'Yes' because of acquisition of the commodity code, and Act 8 is taken.

In Act 8, the CPU 11a updates the registered commodity table such that the acquired commodity code is included in the registered commodity table. Then Act 9 is taken. In this way, if an operation for the purchase registration is performed without instructing the split settlement, the CPU 11a maintains the split flag in a reset state.

In Act 9, the CPU 11a makes a part of the screen of the touch panel 11g as a registration screen. The registration screen indicates the content of the registered commodity table so that the progress of a registration processing is confirmed by the store clerk 21.

Fig. 6 is a diagram exemplifying a registration screen SC2. The registration screen SC2 includes regions R1 and R2.

The region R1 displays the commodity name, the quantity and the unit price of the commodity which is most newly purchase-registered and the total quantity and the total amount of the purchased commodities resulting from the registration of the commodity. The region R2 is displays a list of the commodity name, the quantity, the unit price and the amount of each commodity of which the purchase registration is performed prior to the commodity displayed on the registration screen SC2.

Further, the registration screen SC2 displays various kinds of information relating to a registered purchase-commodity. However, in the case where Act 9 is taken after Act 7, information relating to a purchased commodity is not included in the registered commodity table, and thus, the registration screen indicates only a predetermined basic form without indicating various kinds of information relating to a commodity. In the case where Act 9 is taken after Act 8, the registered commodity table includes only information relating to one commodity, and thus, the registration screen indicates only commodity-related information in the region R2, but not indicating commodity-related information in the region R1.

Further, the CPU 11a displays various functional buttons (not shown) such as a commodity designating button for the store clerk 21 and a subtotal button in an area other than the area serving as the registration screen on the touch panel 11g.

In Act 10 shown in Fig. 3, the CPU 11a determines whether or not the subtotal button displayed on the screen of the touch panel 11g is touched. If the result of the determination of the CPU 11a is 'NO' as the subtotal button on the touch panel 11g is not touched, Act 11 is taken.

In Act 11, the CPU 11a further determines whether or not the commodity code of a commodity to be purchase-registered is acquired. If the result of the determination is 'NO' as no commodity code is acquired, Act 10 is taken again.

In this way, the CPU 11a stands by to wait for the touch on the subtotal button or the acquisition of a commodity code in Act 10 and Act 11. In the standby state, the CPU 11a also determines the occurrence of another event such as execution of another operation, and then may proceed to execute a processing corresponding to the event.

If the commodity code is acquired, the result of the determination of the CPU 11a in Act 11 is 'Yes', and Act 12 is taken.

In Act 12, the CPU 11a updates the registered commodity table such that the acquired commodity code is included in the registered commodity table. Further, the CPU 11a updates the registration screen to reflect the content of the updated registered commodity table. Then, the CPU 11a returns to the standby state described in Act 10 and Act 11. Thus, with the execution of a control processing by the CPU 11a based on a control program, the computer having the CPU 11a as the main unit thereof functions as a creation section.

If the touch on the subtotal button is detected by the touch panel 11g, then the result of the determination of the CPU 11a in Act 10 is 'Yes', and in this case, Act 13 shown in Fig. 4 is taken.

In Act 13, the CPU 11a determines whether or not the split flag is set. If it is determined that the split flag is set (YES in Act 13), Act 14 is taken.

In Act 14, the CPU 11a generates settlement information relating to the registered commodities recorded in the registered commodity table as the m-th settlement information according to the content in the registered commodity table at this point of time. The settlement information includes information such as a list of registered commodities, the total quantity and the total amount of purchased commodities and the like. Thus, with the execution of a control processing by the CPU 11a based on a control program, the computer having the CPU 11a as the main unit thereof functions as a generation section.

In Act 15, the CPU 11a makes a part of the screen of the touch panel 11g as a first selection screen.

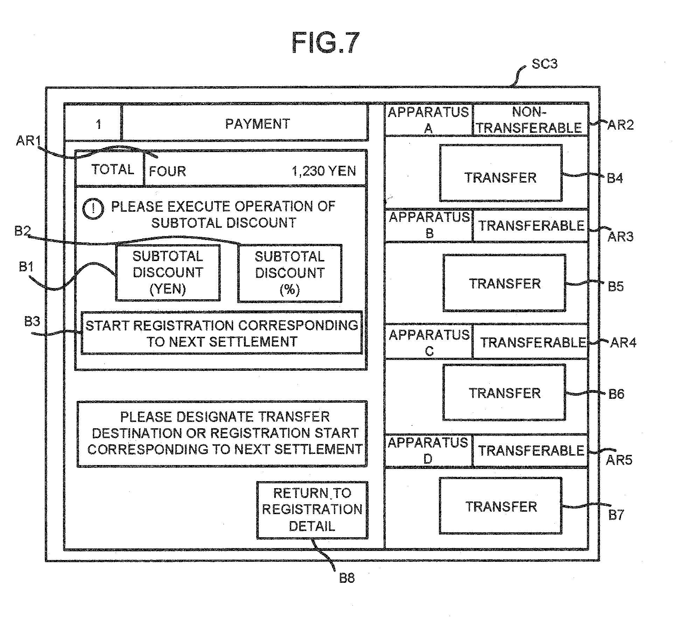

Fig. 7 is a diagram exemplifying the first selection screen SC3.

The first selection screen SC3 includes display areas AR1, AR2, AR3, AR4 and AR5 and buttons B1, B2, B3, B4, B5, B6, B7 and B8.

The CPU 11a displays the total quantity and the total amount included in the settlement information in the display area AR1. The CPU 11a indicates whether or not the settlement information can be transferred to four settlement apparatuses separately in the display areas AR2-AR5. In the present embodiment, the settlement apparatus 12 which is now executing a settlement processing cannot receive the transfer of the settlement information, thus, the CPU 11a indicates information 'non-transferable' in a display area correlated with the settlement apparatus 12 in this state. In a case in which a part of the screen of the touch panel 11g is set to the first selection screen SC3, only the settlement apparatus 12 named 'apparatus A' is carrying out a settlement processing. Further, the buttons B4-B7 may be displayed in different manners corresponding to whether or not correlated settlement apparatuses 12 respectively accept the transfer of the settlement information, or the buttons B4-B7 are not selectively displayed if the correlated settlement apparatuses 12 cannot respectively receive the transfer of the settlement information.

The buttons B1 and B2 are used by the store clerk 21 to instruct an application of a suitable discount for the total amount included in the settlement information. The button B3 is used by the store clerk 21 to instruct the start of the purchase-registration to the next settlement included in the split settlement. The buttons B4-B7 are used by the store clerk 21 to instruct the transfer of the settlement information to the four settlement apparatuses 12 respectively. The button B8 is used by the store clerk 21 to instruct the return to the state in which a part of the screen of the touch panel 11g is the registration screen.

If the result of the determination of Act 13 is 'NO' as the split flag is not set, Act 16 is taken.

In Act 16, the CPU 11a generates settlement information relating to the registered commodities recorded in the registered commodity table according to the content in the registered commodity table at this point of time.

In Act 17, the CPU 11a makes a part of the screen of the touch panel 11g as a second selection screen.

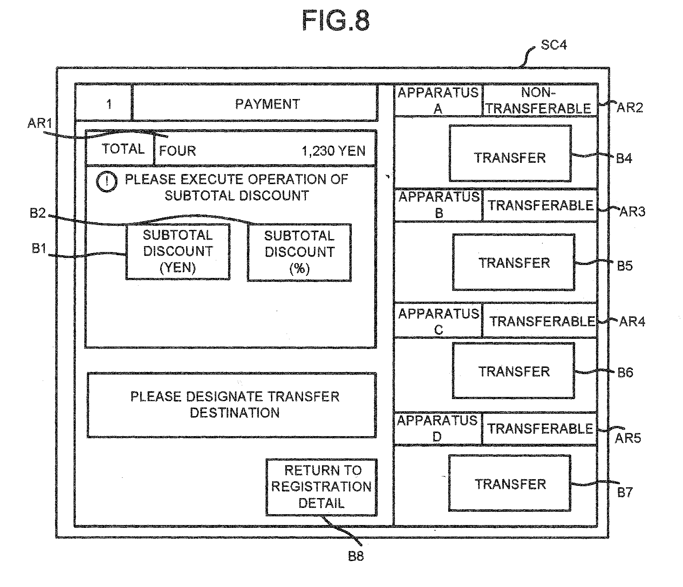

Fig. 8 is a diagram exemplifying the second selection screen SC4. Elements shown in Fig. 8 similar to that in Fig. 7 are denoted with the same reference numerals and therefore are not described repeatedly.

The second selection screen SC4 includes display areas AR1, AR2, AR3, AR4 and AR5 and buttons B1, B2, B4, B5, B6, B7 and B8.

As shown in Fig. 8, the second selection screen SC4 removes the button B3 from the first selection screen SC3. Thus, the second selection screen SC4 becomes a screen through which the store clerk 21 cannot input an instruction for starting a purchase registration for the split settlement.

After making a part of the screen of the touch panel 11g as the first or second selection screen in Act 15 or Act 17, Act 18 is taken. Further, the settlement information generated in Act 14 or Act 16 is being stored in the RAM 11c or the auxiliary memory unit 11d until the settlement information is transferred to one of the settlement apparatuses 12, as described later. Thus, the RAM 11c or the auxiliary memory unit 11d is an example of a memory section.

In Act 18, the CPU 11a determines whether or not the commodity code of a commodity to be purchase-registered is acquired. If the result of the determination is 'NO' as no commodity code is acquired, Act 19 is taken.

In Act 19, the CPU 11a further determines whether or not the settlement apparatus 12 is designated as the destination of the transfer of the settlement information. If the result of the determination is 'NO' as the settlement apparatus 12 is not designated, Act 20 is taken.

In Act 20, the CPU 11a determines whether or not the button B3 is touched. If the result of the determination is 'NO' as the button B3 is not touched, Act 18 is taken again.

In this way, the CPU 11a stands by to wait for the acquisition of a commodity code, the designation on a settlement apparatus 12 or the touch on the button B3 in Act 18 to Act 20. As the button B3 is not displayed if a part of the screen of the touch panel 11g is used as the second selection screen, the result of the determination of the CPU 11a in Act 20 is always 'No'. Therefore, if split flag is not set at the time the CPU 11a is in the standby state described in Act 18-Act 20, the CPU 11a stands by to wait for the acquisition of a commodity code or the designation on one of the settlement apparatuses 12.

Further, the CPU 11a also stands by to wait for the touch on the buttons B1 and B2 in the standby state, although not shown in figures. If either of the buttons B1 and B2 is touched by the store clerk 21 and the touch is detected by the touch panel 11g, the CPU 11a changes the total amount included in the settlement information according to an instruction given by the store clerk 21 thereafter.

If the commodity code is acquired, then the result of the determination of CPU 11a in Act 18 is 'Yes', and thus, Act 21 is taken.

In Act 21, the CPU 11a makes a part of the screen of the touch panel 11g as a registration screen. After that, the CPU 11a executes the process in Act 12 shown in Fig. 3 and repeats the following processing in the same way described above.

In a case in which the CPU 11a is in the standby state described in Act 18-Act 20, the CPU 11a determines that the button B3 is touched (YES in Act 20) if the touch panel 11g detects the touch on the button B3 and then Act 22 is taken.

In Act 22, the CPU 11a increases the value of the variable m by 1.

In Act 23, the CPU 11a clears the registered commodity table.

Then, Act 9 is taken again and the processing following Act 9 are repeated to generate a plurality of settlement information.

Thus, the creation of a new list of the purchased commodities included in the registered commodity table is started as long as the split flag is set, even if the transfer of settlement information described later is not carried out. The CPU 11a prohibits the start of the creation of a new list until settlement information is transferred if execution of the split settlement is not determined or allows the start of the creation of a new list even if no settlement information is transferred if execution of the split settlement is determined. With the execution of the control processing by the CPU 11a according to a control program, the computer having the CPU 11a as the main unit thereof functions as a first control section.

If the store clerk 21 touches any of the buttons B4-B7 on the first or second selection screen SC3 or SC4 to designate one of the settlement apparatuses 12 at the time the CPU 11a is in the standby state described in Act 18-Act 20, the result of the determination of the CPU 11a in Act 19 is 'Yes ' , and thus Act 24 is taken. Further, the result of the determination of the CPU 11a in Act 19 is not 'Yes' even if one of the buttons B4-B7 which is associated with a settlement apparatus 12 that cannot carry out reception of the transfer of settlement information is touched. Thus, the CPU 11a does not accept the designation of a settlement apparatus 12 which cannot carry out reception of the transfer of the settlement information. Moreover, if all the settlement apparatuses 12 are in an inactive state or in an active state in which the settlement apparatuses 12 cannot carry out reception of the transfer of the settlement information, then the CPU 11a spends no time in waiting for the designation of a settlement apparatus 12 at the time the CPU 11a is in the standby state in Act 18-Act 20.

In Act 24, the CPU 11a transfers the settlement information to the designated settlement apparatus 12. The transferred settlement information is information generated in Act 16 if the split flag is not set or one or all of the information generated in Act 14 if the split flag is set. Specifically, the CPU 11a controls the communication unit 11j to send the settlement information to the LAN 13 by taking the designated settlement apparatus 12 as the destination of the transfer of the settlement information, thereby notifying the settlement apparatus 12 of the settlement information. Thus, with the execution of a control processing by the CPU 11a based on a control program, the function of a notification unit is realized through the cooperation of the computer having the CPU 11a as the main unit thereof with the communication unit 11j. Further, the CPU 11a accepts the designation on the settlement apparatus 12 as an instruction for the notification of the settlement information by the operator so as to notify the designated settlement apparatus of the settlement information, in this way, the computer having the CPU 11a as the main unit thereof functions as a second control section.

In Act 25, the CPU 11a makes a part of the screen of the touch panel 11g as a notification screen. Then, the CPU 11a returns to Act 1 shown in Fig. 3 to execute the following processing in the same way descried above.

The notification screen is used for the store clerk 21 so that he or she recognizes that the settlement information is transferred to the settlement apparatus 12 to execute a settlement with the semi-self-type checkout system. Further, the settlement with the semi-self-type checkout system refers to a settlement form in which a settlement processing is carried out in the settlement apparatus 12 according to an operation of the customer 22.

The notification screen may be set to display the same content regardless of the state of the split flag or set to display different contents according to the state of the split flag.

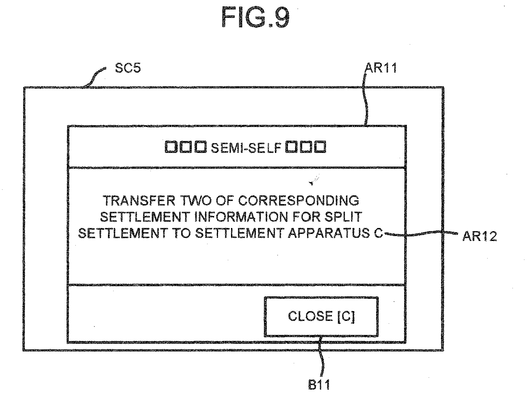

Fig. 9 is a diagram exemplifying a notification screen SC5.

The notification screen SC5 includes display areas AR11 and AR12 and a button B11.

The display area AR11 displays an image with which the store clerk 21 recognizes that the settlement with the semi-self-type checkout system is selected. The display area AR12 displays an image with which the store clerk 21 recognizes that two of the settlement information for the split settlement are transferred to one destination of the four settlement apparatuses 12. The notification screen SC5 is set to display different contents corresponding to the state of the split flag, and thus, the notification screen SC5 is displayed at the time the split flag is set.

The button B11 is used by the store clerk 21 who instructs closing the notification screen SC5.

Then, the CPU 11a returns to Act 1 shown in Fig. 3 in response to the touch on button B11 to repeat the following processing in the same way as descried above.

On the other hand, the CPU 12a starts a control processing according to the control program stored in the ROM 12b or the auxiliary memory unit 12d when the settlement apparatus 12 is started.

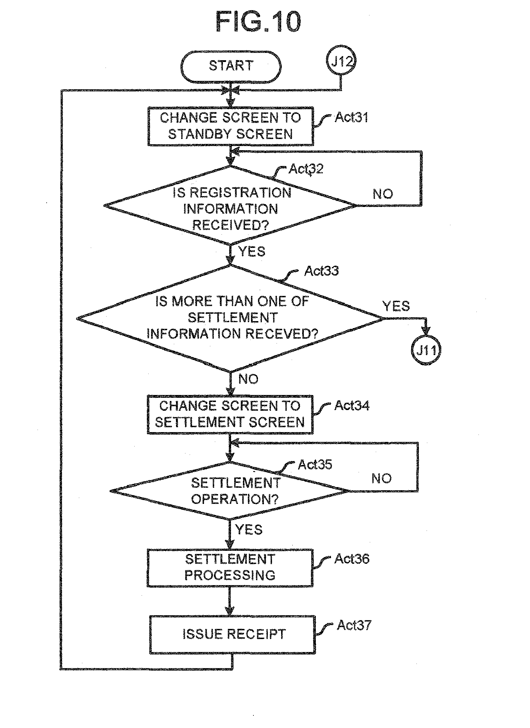

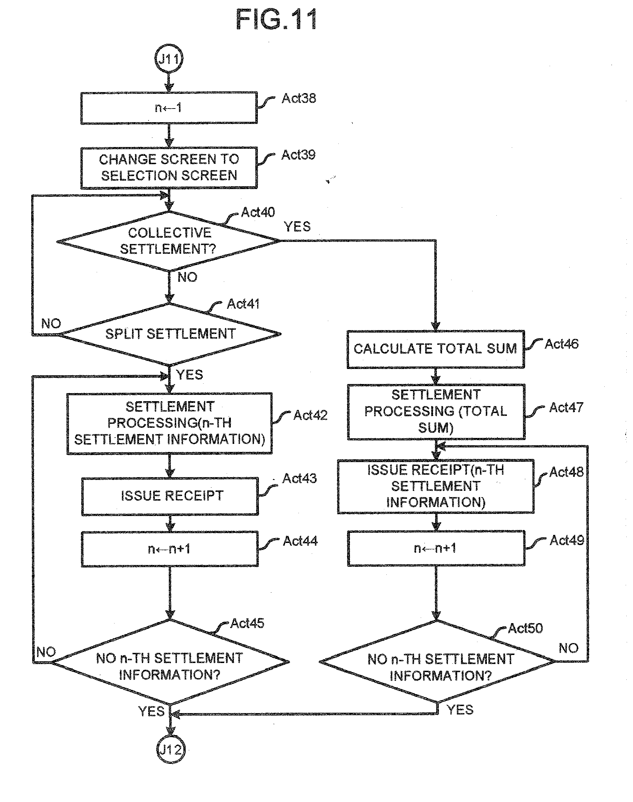

Fig. 10 and Fig. 11 are flowcharts illustrating the control processing carried out by the CPU 12a.

In Act 31, the CPU 12a displays a standby screen on the touch panel 12g. The standby screen indicates that there is no condition to carry out the settlement processing, and thus it is optional to display information in any form or manner. For example, the standby screen displays a message 'settlement processing cannot be carried out' or an optional image presenting an advertisement as a screen saver.

In Act 32, the CPU 12a determines whether or not settlement information is received. The result of the determination of the CPU 12a is 'No' if no settlement information is received, and in this case, Act 32 is taken again. In this way, the CPU 12a stands by to receive settlement information in ACT 32.

Moreover, the settlement information is received by the communication unit 12j of the settlement apparatus 12 which is designated as the destination of the transfer of the settlement information that is sent from the communication unit 11j of the commodity registration apparatus 11 to the LAN 13 and stored in the RAM 12c or the auxiliary memory unit 12d. If a plurality of settlement information are sent, the communication unit 12j receives all of the settlement information and stores the received settlement information in the RAM 12c or auxiliary memory unit 12d. As a consequence, the result of the determination of the CPU 12a in Act 32 is 'Yes', and thus Act 33 is taken.

In Act 33, the CPU 12a determines whether or not the received settlement information is more than one. The result of the determination of the CPU 12a is 'No' if only one settlement information is received, and in this case, Act 34 is taken.

In Act 34, the CPU 12a changes the screen of the touch panel 12g to a settlement screen.

The settlement screen is used to receive an operation by the customer 22 to carry out a settlement processing based on the one received settlement information. For example, the settlement screen displays at least the total amount included in the settlement information. Moreover, the settlement screen may further contain a total quantity and a list of purchased commodities. Furthermore, if settlements according to a plurality of settlement methods are allowed, then the settlement screen includes a button with which the customer 22 selects a settlement method.

In Act 35, the CPU 12a determines whether or not an operation by the customer 22 for carrying out a settlement processing is performed. Then, if the result of the determination of the CPU 12a is 'No' as no corresponding operation for the settlement is performed, then the CPU 12a repeats the process in Act 35. In this way, In Act 35, the CPU 12a stands by to receive the operation for the settlement by the customer.

In a case in which the store clerk 21 touches one of the buttons B4-B7 on the first or second selection screen SC3 or SC4 to transfer the settlement information to one of the settlement apparatuses 12, he or she 21 notifies the customer 22 that a settlement processing is carried out with the settlement apparatus 12 serving as the transfer destination. The customer 22 who receives the notification moves to the designated settlement apparatus 12 to perform a settlement operation on the settlement screen of the designated settlement apparatus 12. If the settlement operation carried out by the customer 22 as described above is detected by the touch panel 12g, then the result of the determination of Act 35 is 'Yes', and then, Act 36 is taken.

In Act 36, the CPU 12a executes a settlement processing. The settlement processing refers to a processing of settling the total amount included in the settlement information stored in the RAM 12c or the auxiliary memory unit 12d according to an operation of the customer 22. The settlement processing may be, for example, a processing in a well-known manner executed by a known self-checkout POS terminal. Thus, with the execution of a control processing by the CPU 12a based on a control program, the computer having the CPU 12a as the main unit thereof functions as a settlement section.

In Act 37, the CPU 12a controls the printer 12h to issue a receipt on which information included in the settlement information stored in the RAM 12c or the auxiliary memory unit 12d and the result of the settlement processing are printed. Then, Act 31 is taken again and the following processing is performed in the same way as descried above.

If a plurality of settlement information are received, then the result of the determination of the CPU 12a in Act 33 is 'Yes ' , and Act 38 shown in Fig. 11 is taken.

In Act 38, the CPU 12a sets '1' as the value of a variable n.

In Act 39, the CPU 12a displays a selection screen in a part of the screen of the touch panel 11g. The selection screen is used to select an individual settlement or a collective settlement by the customer 22. In the individual settlement, a settlement processing corresponding to each of a plurality of settlement information is individually performed. In the collective settlement, a settlement processing corresponding to a plurality of settlement information is collectively performed.

In Act 40, the CPU 12a determines whether or not the customer 22 selects the collective settlement. If the result of the determination is 'No' as the collective settlement is not selected by the customer 22, Act 41 is taken.

In Act 41, the CPU 12a determines whether or not the split settlement is selected. If the result of the determination is 'NO' as the split settlement is not selected, then Act 40 is taken again.

In this way, the CPU 12a waits for the selection on the collective settlement or the split settlement in Act 40 and Act 41. Further, in the waiting state, the CPU 11a confirms the occurrence of another event such as the execution of another operation and may proceed to execute a processing corresponding to the event.

If an operation of selecting the individual settlement is detected by the touch panel 12g, then the result of the determination of the CPU 12a in Act 41 is 'Yes', and the CPU 12a proceeds to execute a process in Act 42.

In Act 42, the CPU 12a carries out a settlement processing based on the n-th settlement information.

In Act 43, the CPU 12a controls the printer 12h to issue a receipt on which information included in the n-th settlement information and the result of the settlement processing are printed.

In Act 44, the CPU 12a increases the value of the variable n by 1.

In Act 45, the CPU 12a determines whether or not the settlement information stored in the RAM 12c or the auxiliary memory unit 12d includes the n-th settlement information. If the settlement information stored in the RAM 12c or the auxiliary memory unit 12d includes the n-th settlement information, the CPU 12a returns to execute a process in Act 42 and carries out processes in Act 42 and Act 43 based on the n-th settlement information. After finishing the execution of processes in Act 42 and Act 43 based on all the settlement information stored in the RAM 12c or the auxiliary memory unit 12d, 'Yes' is taken in ACT 45. Then, Act 31 shown in Fig. 10 is taken again. The CPU 12a returns to a standby state to receive a new settlement information.

In this way, if the customer 22 selects the individual settlement, then the CPU 12a executes a settlement processing sequentially based on the plurality of settlement information to issue receipts individually.

If an operation of selecting the collective settlement is detected by the touch panel 12g at the time the CPU 12a is in the standby state in Act 40 and Act 41, the result of the determination in Act 40 is 'Yes', and Act 46 is taken. In this way, with the execution of the control processing by the CPU 12a according to a control program, the computer having the CPU 12a as the main unit thereof functions as a setting section.

In Act 46, the CPU 12a calculates the total sum of the total amount of each of the settlement information stored in the RAM 12c or the auxiliary memory unit 12d.

In Act 47, the CPU 12a executes a settlement processing to settle the total sum.

In Act 48, the CPU 12a controls the printer 12h to issue a receipt on which information included in the n-th settlement information and the result of the settlement processing are printed.

Therefore, if a plurality of settlement information are received, a plurality of receipts is issued corresponding to the plurality of settlement information in either of the loop of the processing in Act 42-Act 45 and the loop of the processing in Act 48. In this way, with the execution of the control processing by the CPU 12a according to a control program, the computer having the CPU 12a as the main unit thereof functions as an issuing section.

In Act 49, the CPU 12a increases the value of the variable n by 1.

In Act 50, the CPU 12a determines whether or not the settlement information stored in the RAM 12c or the auxiliary memory unit 12d includes the n-th settlement information. If the settlement information stored in the RAM 12c or the auxiliary memory unit 12d includes the n-th settlement information, the CPU 12a returns to execute a process in Act 48 based on the n-th settlement information. After finishing the execution of process in Act 48 based on each of all the settlement information stored in the RAM 12c or the auxiliary memory unit 12d, 'YES' is taken in ACT 50. In this case, Act 31 shown in Fig. 10 is taken again. The CPU 12a returns to a standby state to receive a new settlement information.

In this way, if the customer 22 selects the collective settlement, the CPU 12a settles the sum of the total amount shown in the plurality of settlement information through a settlement processing once. Receipt is sequentially issued based on each of the plurality of settlement information.

Thus, in the commodity registration apparatus 11, normally, only one settlement information based on the purchase registration corresponding to one settlement processing is transferred to one of the settlement apparatuses 12. As a consequence, the settlement apparatus 12 cannot receive the transfer of another settlement information until the settlement processing is completed based on the received settlement information after the one settlement information is transferred.

Nevertheless, if the customer 22 requests the split settlement, purchase registration is continuously carried out in the commodity registration apparatus 11 corresponding to a plurality of settlement operations to continuously generate settlement information (a plurality of settlement information). Then, the commodity registration apparatus 11 collectively transfers the plurality of settlement information to one of the settlement apparatus 12. If the plurality of settlement information are collectively transferred as described above, the settlement apparatus 12 executes a settlement processing based on each of the settlement information.

Consequentially, according to the checkout system 10 of the present embodiment, the customer 22 can carry out the split settlement on one settlement apparatus 12 without operating a plurality of settlement apparatuses 12 for a plurality of settlement operations.

Further, according to the checkout system 10, the customer 22 can freely select the split settlement or collective settlement even in the case of carrying out the split settlement. Moreover, a plurality of receipts are issued corresponding to a plurality of settlement information even in either case of the split settlement or the collective settlement. Thus, the customer 22 can obtain each receipt on which the result of each of the split settlement is recorded in either case of the split settlement or the collective settlement.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

## Claims

1. A checkout system comprising at least one commodity registration apparatus and at least one settlement apparatus, wherein
the commodity registration apparatus comprises:
a creation section configured to acquire commodity codes of purchased commodities to create a list of the purchased commodities;
a generation section configured to generate settlement information for settling the purchased commodities according to the list created by the creation section;
a notification section configured to notify one of the settlement apparatuses of the settlement information generated by the generation section;
a determination section configured to determine, according to an instruction, execution of a split settlement in which the settlement of the commodities purchased by the same customer is split into plural settlements;
a first control section configured to control the creation section to prohibit the start of the creation of a new list until settlement information is notified by the notification section if the execution of the split settlement is not determined by the determination section, or to allow the start of the creation of a new list even if no settlement information is notified by the notification section if the execution of the split settlement is determined;
a memory section configured to store the settlement information that is not notified by the notification section; and
a second control section configured to control the notification section to notify all the settlement information stored in the memory section to one of the settlement apparatuses according to an instruction of notification of the settlement information; and
the settlement apparatus comprises:
a settlement section configured to execute a settlement processing according to the settlement information notified by the notification section; and
an issuing section configured to issue, if a plurality of settlement information are notified by the notification section, receipts separately based on each of the plurality of settlement information.

2. A commodity registration apparatus constituting a checkout system with at least one settlement apparatus, comprising:
a creation section configured to acquire commodity codes of the purchased commodities to create a list of the purchased commodities;
a generation section configured to generate settlement information for settling the purchased commodities according to the list created by the creation section;
a notification section configured to notify one of the settlement apparatuses of the settlement information generated by the generation section;
a determination section configured to determine, according to an instruction, the execution of a split settlement in which the settlement of the commodities purchased by the same customer is split into plural settlements;
a first control section configured to control the creation section to prohibit the start of the creation of a new list until settlement information is notified by the notification section if the execution of the split settlement is not determined by the determination section, or to allow the start of the creation of a new list even if no settlement information is notified by the notification section if the execution of the split settlement is determined;
a memory section configured to store the settlement information that is not notified by the notification section; and
a second control section configured to control the notification section to notify all the settlement information stored in the memory section to one of the settlement apparatuses according to an instruction of notification of the settlement information.

3. A settlement apparatus constituting a checkout system with at least one commodity registration apparatus according to claim 2, the settlement apparatus comprising:
a settlement section configured to execute a settlement processing according to the settlement information notified by the notification section; and
an issuing section configured to issue, if a plurality of settlement information are notified by the notification section, receipts separately based on each of the plurality of settlement information.

4. The settlement apparatus according to claim 3, further comprising:
a setting section configured to set whether or not a collective settlement is executed according to an instruction from a second operator different from the operator if a plurality of settlement information are notified by the notification section, wherein
the settlement section separately executes a plurality of times of settlement processing based on the plurality of settlement information notified by the notification section if it is set by the setting section that the collective settlement is not executed, or executes settlement processing once to settle the sum of the total amount shown in the plurality of settlement information notified by the notification section if it is set by the setting section that the collective settlement is executed.

5. A method for notifying settlement information from a commodity registration apparatus which constitutes a checkout system according to claim 1, with at least one settlement apparatus, including:
acquiring commodity codes of purchased commodities to create a list of the purchased commodities;
generating settlement information for settling the purchased commodities according to the created list;
notifying one of the settlement apparatuses of the settlement information;
determining, according to an instruction, the execution of a split settlement in which the settlement of the commodities purchased by the same customer is split into plural settlements;
prohibiting the start of the creation of a new list until settlement information is notified if the execution of the split settlement is not determined or allowing the start of the creation of a new list even if no settlement information is notified if the execution of the split settlement is determined;
storing the settlement information that is not notified; and
notifying all the settlement information to one of the settlement apparatuses according to an instruction of notification of the settlement information.

6. A method for issuing a receipt from one of settlement apparatuses of a checkout system composed of at least one commodity registration apparatus and the settlement apparatuses according to claim 1, including:
executing a settlement processing according to the settlement information notified from the commodity registration apparatus; and
issuing, if a plurality of settlement information are notified from the commodity registration apparatus, receipts separately based on each of the plurality of settlement information.
